# EUROPÄISCHE PATENTSCHRIFT

(11) **EP 3 804 955 B1**
(45) Veröffentlichungstag und Bekanntmachung des Hinweises auf die Patenterteilung: **31.05.2023**
(21) Anmeldenummer: 20191700.2
(22) Anmeldetag: 19.08.2020
(51) Int. Cl.: B29C 48/395, B29C 48/68, B29C 48/80

(54) **HEIZVORRICHTUNG FÜR MINDESTENS EINEN GEHÄUSEABSCHNITT EINER SCHNECKENMASCHINE SOWIE VERFAHREN ZUR INSTANDHALTUNG EINER DERARTIGEN HEIZVORRICHTUNG**
HEATING DEVICE FOR AT LEAST ONE HOUSING SECTION OF A SCREW MACHINE AND METHOD FOR MAINTAINING SUCH A HEATING DEVICE
DISPOSITIF DE CHAUFFAGE POUR AU MOINS UNE SECTION DU BOITIER D'UNE MACHINE À VIS AINSI QUE PROCÉDÉ D'ENTRETIEN D'UN TEL APPAREIL DE CHAUFFAGE

(30) Priorität: 11.10.2019 DE 102019215700
(43) Veröffentlichungstag der Anmeldung: 14.04.2021
(73) Patentinhaber: Coperion GmbH, 70469 Stuttgart (DE)
(72) Erfinder: Helmig, Dieter, 75438 Knittlingen (DE)
(74) Vertreter: Rau, Schneck & Hübner Patentanwälte Rechtsanwälte PartGmbB

(56) Entgegenhaltungen:
- AT-U2- 6 979
- DE-A1-102006 022 646
- DE-A1-102017 002 830

## Beschreibung

Der Inhalt der deutschen Patentanmeldung 10 2019 215 700.9 wird durch Bezugnahme hierin aufgenommen.

Die Erfindung betrifft eine Heizvorrichtung für mindestens einen Gehäuseabschnitt einer Schneckenmaschine sowie eine Schneckenmaschine mit einer derartigen Heizvorrichtung. Ferner betrifft die Erfindung ein Verfahren zur Instandhaltung einer derartigen Heizvorrichtung.

Aus der DE 10 2006 022 646 A1 ist ein Extruder mit einem Gehäuse bekannt, das aus mehreren Gehäuseabschnitten aufgebaut ist. An den Gehäuseabschnitten sind zugehörige elektrische Heizvorrichtungen angeordnet. Die jeweilige Heizvorrichtung umfasst elektrische Heizelemente in Form von Widerstandsheizpatronen, die in Durchgangsbohrungen des Gehäuseabschnitts angeordnet sind. Die Heizleiter der Heizelemente sind in ein flüssigkeitsdichtes Anschlussgehäuse geführt und dort an einer Klemmleiste zusammengeführt. Das Anschlussgehäuse umfasst ferner ein Anschlussmittel für eine Stromleitung, das über eine Kontaktleitung mit der Klemmleiste kontaktiert ist.

Aus der AT 006 979 U2 ist ein Heizstab zur Entfeuchtung von feuchtem Mauerwerk bekannt. Im Betrieb sind mehrere Heizstäbe zu einem Netzwerk verbunden und an eine Versorgungsleitung angeschlossen.

Aus der DE 10 2017 002 830 A1 ist ein Kühl- und/oder Gefriergerät mit einer elektrischen Heizung bekannt.

Der Erfindung liegt die Aufgabe zugrunde, eine Heizvorrichtung für mindestens einen Gehäuseabschnitt einer Schneckenmaschine zu schaffen, die flexibel einsetzbar und einfach instand zu halten ist.

Diese Aufgabe wird durch eine Heizvorrichtung mit den Merkmalen des Anspruchs 1 gelöst. Dadurch, dass die jeweilige Anschlussleitung mit einem zugehörigen Kontaktstecker verbunden ist, der in einfacher Weise mit einem zugehörigen Steckkontakt eines Steckkontaktverteilers elektrisch leitend verbunden werden kann, kann das jeweilige elektrische Heizelement einzeln an eine Energieversorgung angeschlossen und wieder getrennt werden. Die mindestens zwei Kontaktstecker und die mindestens zwei Steckkontakte sind jeweils reversibel, also wieder lösbar, miteinander mechanisch und/oder elektrisch verbunden. Die mindestens zwei Kontaktstecker und/oder die mindestens zwei Steckkontakte sind insbesondere zugänglich, vorzugsweise frei zugänglich angeordnet. Die Instandhaltung der Heizvorrichtung ist einfach, da ein defektes elektrisches Heizelement einzeln von dem Steckkontaktverteiler elektrisch getrennt und durch ein funktionsfähiges elektrisches Heizelement ersetzt werden kann. Dies kann durch eine beliebige Bedienperson erfolgen. Eine Elektrofachkraft ist zum Austausch eines defekten Heizelements nicht erforderlich.

Durch den modularen Aufbau muss zum Austausch eines defekten Heizelements insbesondere nicht die gesamte Heizvorrichtung von dem zugehörigen Gehäuseabschnitt demontiert und zum elektrischen Trennen ein Anschlussgehäuse geöffnet werden, wozu regelmäßig eine Elektrofachkraft erforderlich ist.

Das mindestens eine Schaltelement ist vorzugsweise Teil der Versorgungseinheit und/oder der jeweiligen Heizeinheit. Vorzugsweise ist das mindestens eine Schaltelement in den Steckkontaktverteiler integriert. Die Heizvorrichtung umfasst beispielsweise für jeden Steckkontakt und/oder für jedes elektrische Heizelement ein zugehöriges Schaltelement, so dass das jeweilige Heizelement einzeln ein- und ausgeschaltet werden kann, und/oder für mehrere Steckkontakte und/oder für mehrere elektrische Heizelemente ein zugehöriges Schaltelement, so dass die mehreren Heizelemente gemeinsam ein- und ausgeschaltet werden können. Das mindestens eine Schaltelement ist insbesondere als aktives Schaltelement ausgebildet, beispielsweise als Halbleiterrelais (solid state relais). Das mindestens eine Schaltelement wird vorzugsweise über die elektrische Versorgungsleitung mit elektrischer Energie versorgt.

Das jeweilige Heizelement ist mit der zugehörigen Anschlussleitung beispielsweise mittels einer Schraubverbindung, einer Steckverbindung oder einer festen Verbindung mechanisch und/oder elektrisch verbunden. Die Steckverbindung ist beispielsweise als Winkelklotz ausgebildet und nur mittels eines Abziehwerkzeugs lösbar. Das jeweilige Heizelement und die zugehörige Anschlussleitung sind vorzugsweise fest, also mechanisch und elektrisch unlösbar miteinander verbunden. Die mindestens zwei Heizelemente sind beispielsweise als elektrische Widerstandsheizelemente bzw. Widerstandsheizpatronen ausgebildet. Die mindestens zwei Anschlussleitungen weisen jeweils eine Länge L auf, wobei vorzugsweise gilt: 0,5 m < L ≤ 5 m, insbesondere 1,0 m ≤ L ≤ 4 m, insbesondere 1,5 m ≤ L ≤ 3 m. Durch die Länge L kann der Steckkontaktverteiler je nach Bedarf beabstandet zu den mindestens zwei Heizelementen angeordnet werden.

Die mindestens zwei Anschlussleitungen sind insbesondere fest mit den zugehörigen Kontaktsteckern verbunden. Dies gewährleistet einen flexiblen Einsatz und eine einfache Instandhaltung. Durch die feste, also unlösbare mechanische und elektrische Verbindung zwischen der jeweiligen Anschlussleitung und dem zugehörigen Kontaktstecker wird ein hohes Maß an Personenschutz gewährleistet, so dass das jeweilige Heizelement in einfacher Weise auch von einer beliebigen Bedienperson ausgetauscht werden kann. Eine Elektrofachkraft ist somit nicht erforderlich. Das jeweilige Heizelement bildet insbesondere zusammen mit der zugehörigen Anschlussleitung und dem zugehörigen Kontaktstecker eine Heizeinheit aus, die ein austauschbares Modul der Heizvorrichtung bildet.

Die Versorgungsleitung ist lösbar, beispielsweise mittels einer Schraubverbindung oder Steckverbindung, oder fest mechanisch und/oder elektrisch mit dem Steckkontaktverteiler verbunden. Ist die Versorgungsleitung lösbar mit dem Steckkontaktverteiler verbunden, so weist der Steckkontaktverteiler vorzugsweise zwei Versorgungsleitungsanschlüsse auf. Hierdurch kann die Versorgungsleitung einer weiteren Heizvorrichtung an den Stecckontaktverteiler angeschlossen werden, so dass mittels der Versorgungsleitungen die Steckkontaktverteiler in Reihe verbunden sind und auf diese Weise die Energieversorgung von Heizvorrichtung zu Heizvorrichtung weiter geführt wird.

Die elektrische Versorgungsleitung ist insbesondere flexibel ausgebildet. Dies gewährleistet einen flexiblen Einsatz und eine einfache Instandhaltung. Dadurch, dass die elektrische Versorgungsleitung flexibel, insbesondere biegbar, ausgebildet ist, ist eine einfache Leitungsführung und eine flexible Anordnung des zugehörigen Steckkontaktverteilers möglich.

Der Steckkontaktverteiler ist über die Versorgungsleitung mit einer Energieversorgung verbunden und kann insbesondere in einfacher Weise von der Energieversorgung getrennt werden, beispielsweise indem ein Versorgungsleitungskontaktstecker ausgesteckt wird.

Durch den modularen Aufbau können die mindestens zwei elektrischen Heizelemente je nach Bedarf flexibel ausgewählt und zu der Heizvorrichtung zusammengenbaut werden.

Eine Heizvorrichtung nach Anspruch 2 gewährleistet einen flexiblen Einsatz und eine einfache Instandhaltung. Dadurch, dass die mindestens zwei Anschlussleitungen flexibel, insbesondere biegbar, ausgebildet sind, wird eine einfache Leitungsführung der mindestens zwei Anschlussleitungen sowie eine einfache Montage und Demontage der zugehörigen Heizelemente ermöglicht. Ausgehend von dem jeweiligen elektrischen Heizelement kann die zugehörige Anschlussleitung in gewünschter Weise zu dem Steckkontaktverteiler geführt werden.

Eine Heizvorrichtung nach Anspruch 3 gewährleistet einen flexiblen Einsatz und eine einfache Instandhaltung. Durch die Anzahl der Steckkontakte kann der Aufbau der Heizvorrichtung je nach Bedarf angepasst bzw. optimiert werden. Weist der Steckkontaktverteiler beispielsweise acht Stecckontakte auf, so kann entweder ein Gehäuseabschnitt mit acht Heizelementen oder zwei Gehäuseabschnitte mit jeweils vier Heizelementen beheizt werden. Die Anzahl der Steckkontaktverteiler kann durch die Anzahl der Steckkontakte optimiert werden.

Eine Heizvorrichtung nach Anspruch 4 gewährleistet einen flexiblen Einsatz und eine einfache Instandhaltung. Die feste, also unlösbare mechanische und elektrische Verbindung zwischen der Versorgungsleitung und dem Steckkontaktverteiler gewährleistet ein hohes Maß an Personenschutz. Durch die feste Verbindung der elektrischen Versorgungsleitung mit dem Steckkontaktverteiler und gegebenenfalls mit einem Versorgungsleitungskontaktstecker bilden diese eine Versorgungseinheit aus. Die jeweilige Versorgungseinheit bildet ein Modul der Heizvorrichtung.

Eine Heizvorrichtung nach Anspruch 5 gewährleistet einen flexiblen Einsatz und eine einfache Instandhaltung. Dadurch, dass der jeweilige Stecckontakt und der zugehörige Kontaktstecker mechanisch und elektrisch leitend miteinander verbindbar und wieder lösbar sind, ist eine einfache Montage und Demontage des zugehörigen Heizelements möglich. Hierdurch können die Heizelemente einfach und je nach Bedarf von einer beliebigen Bedienperson gewechselt werden. Insbesondere ist für einen Wechsel eines Heizelements keine Elektrofachkraft erforderlich. Das Heizelement kann von einer Bedienperson in einfacher Weise durch Ausstecken des Kontaktsteckers aus dem Steckkontakt mechanisch und elektrisch getrennt werden. Die Bedienperson kann anschließend ein Heizelement durch Einstecken des zugehörigen Kontaktsteckers in den Steckkontakt wieder mechanisch und elektrisch leitend mit dem Steckkontaktverteiler verbinden. Die Heizelemente können somit einfach von der Energieversorgung getrennt und wieder angeschlossen werden.

Eine Heizvorrichtung nach Anspruch 6 gewährleistet einen flexiblen Einsatz und eine einfache Instandhaltung. Die Versorgungseinheit bildet ein Modul der Heizvorrichtung, das in einfach auswechselbar ist. Zur Ausbildung der Versorgungseinheit ist der Steckkontaktverteiler vorzugsweise fest und/oder lösbar mit der zugehörigen Versorgungsleitung und/oder die Versorgungsleitung fest mit einem zugehörigen Versorgungsleitungskontaktstecker verbunden. Die Versorgungseinheit ist für eine Nennspannung von mindestens 200 V, insbesondere von mindestens 380 V, und insbesondere von mindestens 460 V ausgelegt. Vorzugsweise liegt die Nennspannung zwischen 200 V und 480 V.

Eine Heizvorrichtung nach Anspruch 7 gewährleistet einen flexiblen Einsatz und eine einfache Instandhaltung. Die jeweilige Heizeinheit bildet ein Modul der Heizvorrichtung aus, das einfach auswechselbar ist. Vorzugsweise sind einer Versorgungseinheit mindestens zwei, insbesondere mindestens drei, und insbesondere mindestens vier Heizeinheiten zugeordnet. Die einer Versorgungseinheit zugeordneten mindestens zwei Heizeinheiten sind identisch und/oder unterschiedlich ausgebildet. Beispielsweise können die mindestens zwei Heizeinheiten eine identische Heiznennleistung und/oder unterschiedliche Heiznennleistungen aufweisen. Die jeweilige Heizeinheit ist für eine Nennspannung von mindestens 200 V, insbesondere von mindestens 380 V, und insbesondere von mindestens 460 V ausgelegt. Vorzugsweise liegt die Nennspannung zwischen 200 V und 480 V.

Eine Heizvorrichtung nach Anspruch 8 gewährleistet einen flexiblen Einsatz und eine einfache Instandhaltung. Die Schutzklasse gewährleistet ein hohes Maß an Personenschutz. Für die Schutzklasse gilt insbesondere die Norm DIN EN 60529. Durch die Schutzklasse wird insbesondere gewährleistet, dass der Austausch eines Bauteils und/oder eines Moduls der Heizvorrichtung durch eine beliebige Bedienperson erfolgen kann. Eine Elektrofachkraft ist zum Austausch nicht erforderlich.

Eine Heizvorrichtung nach Anspruch 9 gewährleistet einen flexiblen Einsatz und eine einfache Instandhaltung. Durch den mindestens einen Datenbusanschluss ist das jeweilige Schaltelement mittels eines Datenbusses ansteuerbar. Hierdurch können insbesondere sämtliche Schaltelemente mittels eines Datenbusses bzw. einer Datenbusleitung angesteuert werden. Die Datenbusleitung verbindet insbesondere alle Schaltelemente miteinander. Der Datenbus ist beispielsweise als Feldbus ausgebildet. Vorzugsweise sind die Steckkontaktverteiler mehrerer Heizvorrichtungen mittels einer Datenbusleitung in Reihe verbunden, so dass in die Steckkontaktverteiler integrierte Schaltelemente mittels der Datenbusleitung bzw. des Datenbusses ansteuerbar sind. Das mindestens eine Schaltelement ist insbesondere mittels eines Durchdringkontakts an die Datenbusleitung angeschlossen. Ein Durchdringkontakt durchdringt bei einer Klemmung an der Datenbusleitung die Außenhülle der Datenbusleitung und bildet einen Kontakt zur Datenübertragung aus.

Eine Heizvorrichtung nach Anspruch 10 gewährleistet einen flexiblen Einsatz und eine einfache Instandhaltung. Durch den mindestens einen Messsensor kann beispielsweise der von dem mindestens einen Heizelement aufgenommene Strom gemessen und überwacht werden. Durch die Messung und Überwachung der Stromaufnahme können Abweichungen von einer Soll-Stromaufnahme festgestellt werden. Hierdurch kann ein Ausfall eines Heizelements frühzeitig erkannt werden. Der mindestens eine Messsensor ist insbesondere als Strom-Messsensor ausgebildet. Der mindestens eine Messsensor ist vorzugsweise in ein zugehöriges Schaltelement integriert. Das mindestens eine Schaltelement ermöglicht vorzugsweise eine Überwachung, ob ein Heizelement angeschlossen und funktionsfähig ist.

Eine Heizvorrichtung nach Anspruch 11 gewährleistet einen flexiblen Einsatz und eine einfache Instandhaltung. Durch den mindestens einen Versorgungsleitungsanschluss ist die Versorgungsleitung einer weiteren Heizvorrichtung an dem Steckkontaktverteiler anschließbar, so dass mittels der Versorgungsleitungen die Steckkontaktverteiler in Reihe verbunden werden können und auf diese Weise die Energieversorgung von Heizvorrichtung zu Heizvorrichtung geführt werden kann. Die zu dem Steckkontaktverteiler gehörige Versorgungsleitung ist lösbar oder fest mit dem Stecckontaktverteiler verbunden. Vorzugsweise weist der jeweilige Steckkontaktverteiler zwei Versorgungsleitungsanschlüsse auf, so dass eine eigene Versorgungsleitung sowie die Versorgungsleitung einer weiteren Heizvorrichtung lösbar an den Steckkontaktverteiler angeschlossen werden können. Hierdurch kann der Verkabelungsaufwand in einfacher Weise optimiert werden.

Der Erfindung liegt ferner die Aufgabe zugrunde, eine Schneckenmaschine mit mindestens einer Heizvorrichtung für mindestens einen Gehäuseabschnitt zu schaffen, die flexibel einsetzbar und einfach instand zu halten ist.

Diese Aufgabe wird durch eine Schneckenmaschine mit den Merkmalen des Anspruchs 12 gelöst. Die Vorteile der erfindungsgemäßen Schneckenmaschine entsprechen den bereits beschriebenen Vorteilen der erfindungsgemäßen Heizvorrichtung. Vorzugsweise ist die Schneckenmaschine eine Mehrwellen-Schneckenmaschine, insbesondere eine Zweiwellen-Schneckenmaschine. Die Mehrwellen-Schneckenmaschine umfasst mindestens zwei einander durchdringende Gehäusebohrungen, in denen jeweils eine Behandlungselementwelle drehbar angeordnet ist. Die mindestens zwei Behandlungselementwellen sind vorzugsweise in gleichen Drehrichtungen drehantreibbar und/oder einander dichtkämmend ausgebildet. Vorzugsweise weist die Schneckenmaschine mehrere Heizvorrichtungen auf. Die Heizvorrichtungen können identisch und/oder unterschiedlich aufgebaut sein. Die Heizvorrichtungen können sich beispielsweise in der Anzahl der Heizelemente und/oder in der Heiznennleistung unterscheiden.

Die Schneckenmaschine ist beispielsweise Teil einer Vorrichtung zur Aufbereitung von Material. Die Vorrichtung umfasst ein Untergestell, an dem die Schneckenmaschine angeordnet ist. Die Vorrichtung umfasst vorzugsweise einen elektrischen Antriebsmotor und ein Getriebe, die an dem Untergestell angeordnet sind. Der Steckkontaktverteiler, insbesondere die Versorgungseinheit, der mindestens einen Heizvorrichtung ist vorzugsweise an dem Untergestell angeordnet, insbesondere beabstandet zu der Schneckenmaschine. Beispielsweise kann an dem Untergestell ein Leitungskanal angeordnet und/oder ausgebildet sein. Die Versorgungseinheit ist insbesondere an dem Leitungskanal und/oder in dem Leitungskanal angeordnet.

Eine Schneckenmaschine nach Anspruch 13 gewährleistet einen flexiblen Einsatz und eine einfache Instandhaltung der mindestens einen Heizvorrichtung. Dadurch, dass die mindestens zwei elektrischen Heizelemente über die zugehörigen Anschlussleitungen und Kontaktstecker mit dem Steckkontaktverteiler verbunden sind, kann der Steckkontaktverteiler einerseits örtlich beabstandet von dem mindestens einen Gehäuseabschnitt angeordnet werden und andererseits die Anschlussleitungen in gewünschter Weise geführt werden, so dass weder der Steckkontaktverteiler noch die Anschlussleitungen bzw. die Heizelemente die Anordnung der mindestens einen Wärmedämmhaube behindern. Die Demontage der mindestens einen Wärmedämmhaube ist einfach möglich, da hierfür die mindestens eine Heizvorrichtung bzw. ein Bauteil der mindestens einen Heizvorrichtung nicht demontiert werden muss. Nach der Demontage der mindestens einen Wärmedämmhaube ist die mindestens eine Heizvorrichtung frei zugänglich, so dass die mindestens eine Heizvorrichtung in der erforderlichen Weise gewartet bzw. instand gehalten werden kann. Insbesondere kann in einfacher Weise ein defektes Heizelement ausgetauscht werden.

Die mindestens eine Wärmedämmhaube ist insbesondere U-förmig und/oder einteilig ausgebildet. Dies gewährleistet einen flexiblen Einsatz und eine einfache Instandhaltung der mindestens einen Heizvorrichtung. Da die mindestens eine Heizvorrichtung den Aufbau und die Anordnung der mindestens einen Wärmedämmhaube nicht beeinträchtigt, kann die mindestens eine Wärmedämmhaube U-förmig und/oder einteilig ausgebildet werden. Hierdurch kann die mindestens eine Wärmedämmhaube in einfacher Weise in Verbindung mit der mindestens einen Heizvorrichtung eingesetzt werden. Insbesondere kann die mindestens eine Wärmedämmhaube in einfacher Weise als Ganzes demontiert werden, so dass die mindestens eine Heizvorrichtung zur Wartung bzw. Instandhaltung frei zugänglich ist.

Zwischen der mindestens einen Wärmedämmhaube und dem Gehäuse ist insbesondere ein Spalt ausgebildet, wobei durch den Spalt die mindestens zwei Anschlussleitungen zu dem Steckkontaktverteiler geführt sind. Dies gewährleistet einen flexiblen Einsatz und eine einfache Instandhaltung der mindestens einen Heizvorrichtung. Dadurch, dass zwischen der mindestens einen Wärmedämmhaube und dem Gehäuse ein Spalt ausgebildet wird, können die mindestens zwei Anschlussleitungen in einfacher Weise von den zugehörigen Heizelementen durch den Spalt zu dem zugehörigen Steckkontaktverteiler geführt werden. Die Anordnung der mindestens einen Wärmedämmhaube wird somit durch die mindestens eine Heizvorrichtung nicht beeinträchtigt, so dass die mindestens eine Heizvorrichtung einfach und flexibel in Verbindung mit der mindestens einen Wärmedämmhaube einsetzbar ist. Die mindestens eine Wärmedämmhaube kann in einfacher Weise, insbesondere durch Abheben, demontiert werden, so dass die mindestens eine Heizvorrichtung zur Wartung bzw. Instandhaltung frei zugänglich ist.

Der Erfindung liegt ferner die Aufgabe zugrunde, ein Verfahren zur einfachen Instandhaltung einer Heizvorrichtung für mindestens einen Gehäuseabschnitt einer Schneckenmaschine zu schaffen.

Diese Aufgabe wird durch ein Verfahren mit den Merkmalen des Anspruchs 14 gelöst. Das erfindungsgemäße Verfahren kann insbesondere auch den Schritt der Bereitstellung einer Schneckenmaschine nach mindestens einem der Ansprüche 12 und 13 umfassen. Die Vorteile des erfindungsgemäßen Verfahrens entsprechen den bereits beschriebenen Vorteilen der erfindungsgemäßen Heizvorrichtung und der erfindungsgemäßen Schneckenmaschine.

Weitere Merkmale, Vorteile und Einzelheiten der Erfindung ergeben sich aus der nachfolgenden Beschreibung mehrerer Ausführungsbeispiele. Es zeigen:
- Fig. 1: eine Seitenansicht einer Mehrwellen-Schneckenmaschine gemäß einem ersten Ausführungsbeispiel mit einem aus mehreren Gehäuseabschnitten ausgebildeten Gehäuse und Heizvorrichtungen zum Beheizen von Gehäuseabschnitten,
- Fig. 2: eine teilweise geschnittene Ansicht durch die MehrwellenSchneckenmaschine entlang der Schnittlinie II-II in Fig. 1 zur Veranschaulichung einer Heizvorrichtung,
- Fig. 3: eine perspektivische Darstellung eines einzelnen Gehäuseabschnitts mit einer Heizvorrichtung und einer Wärmedämmhaube,
- Fig. 4: eine Draufsicht auf eine Versorgungseinheit der Heizvorrichtung in Fig. 2, die mit weiteren Versorgungseinheiten verbunden ist,
- Fig. 5: eine Draufsicht auf eine Heizeinheit der Heizvorrichtung in Fig. 2,
- Fig. 6: eine Seitenansicht einer Mehrwellen-Schneckenmaschine gemäß einem zweiten Ausführungsbeispiel,
- Fig. 7: eine Draufsicht auf eine Versorgungseinheit der Heizvorrichtung in Fig. 6, die mit weiteren Versorgungseinheiten verbunden ist, und
- Fig. 8: eine Draufsicht auf eine Versorgungseinheit einer Heizvorrichtung gemäß einem dritten Ausführungsbeispiel.

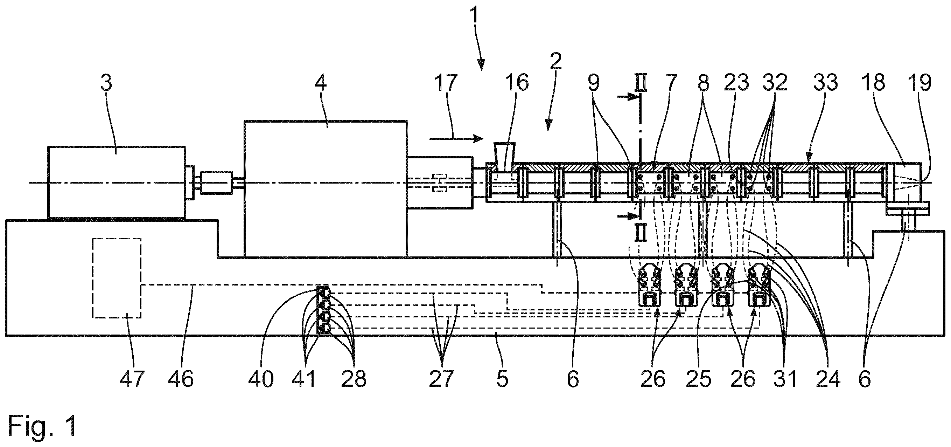

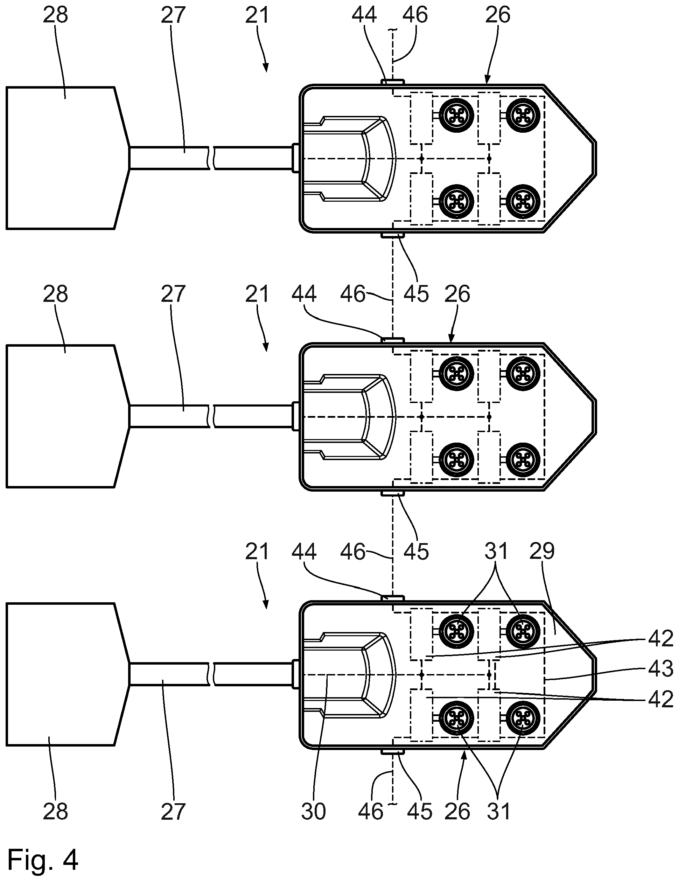

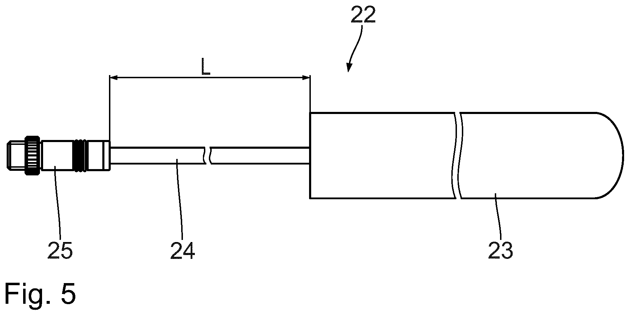

Nachfolgend ist anhand der Fig. 1 bis 5 ein erstes Ausführungsbeispiel der Erfindung beschrieben. Eine in Fig. 1 dargestellte Vorrichtung 1 zur Aufbereitung von Material, insbesondere Kunststoffmaterial, umfasst eine Mehrwellen-Schneckenmaschine 2, die von einem Antriebsmotor 3 über ein Getriebe 4 drehantreibbar ist. Die Mehrwellen-Schneckenmaschine 2, der Antriebsmotor 3 und das Getriebe 4 sind auf einem Untergestell 5 befestigt. Die Mehrwellen-Schneckenmaschine 2 ist hierbei über Stützen 6 an dem Untergestell 5 abgestützt.

Die Mehrwellen-Schneckenmaschine 2 umfasst ein Gehäuse 7, das aus mehreren Gehäuseabschnitten 8 aufgebaut ist, die mittels Flanschen 9 miteinander verbunden sind. Das Gehäuse 7 weist zwei einander durchdringende Gehäusebohrungen 10, 11 auf, die im Querschnitt die Form einer liegenden Acht haben. In den Gehäusebohrungen 10, 11 sind zwei Behandlungselementwellen 12, 13 angeordnet, die dichtkämmend ausgebildet sind und um zugehörige Drehachsen 14, 15 in gleichen Drehrichtungen drehantreibbar sind.

Im ersten Gehäuseabschnitt 8 ist zum Zuführen des aufzubereitenden Materials in die Gehäusebohrungen 10, 11 eine Zuführöffnung 16 ausgebildet. Das Material wird mittels der Behandlungselementwellen 12, 13 in einer Förderrichtung 17 transportiert und aufbereitet. Das aufbereitete Material wird durch eine in einer Düsenplatte 18 ausgebildete Austragsöffnung 19 ausgetragen. Die Düsenplatte 18 ist endseitig an dem letzten Gehäuseabschnitt 8 befestigt.

Die Mehrwellen-Schneckenmaschine 2 umfasst für zumindest einzelne Gehäuseabschnitte 8 eine jeweilige elektrische Heizvorrichtung 20. Die Heizvorrichtungen 20 sind identisch ausgebildet, so dass nachfolgend lediglich eine der Heizvorrichtungen 20 beschrieben ist.

Die Heizvorrichtung 20 umfasst eine Versorgungseinheit 21 und vier zugehörige Heizeinheiten 22. Die Heizeinheiten 22 sind identisch ausgebildet. Die Heizeinheiten 22 umfassen jeweils ein elektrisches Heizelement 23, das über eine Anschlussleitung 24 mit einem Kontaktstecker 25 mechanisch und elektrisch verbunden ist. Die jeweilige Anschlussleitung 24 ist fest, also mechanisch und elektrisch unlösbar, mit dem zugehörigen Heizelement 23 und dem zugehörigen Kontaktstecker 25 verbunden. Die jeweilige Anschlussleitung 24 kann somit nicht zerstörungsfrei von dem Heizelement 23 und dem Kontaktstecker 25 getrennt werden. Die jeweilige Anschlussleitung 24 ist flexibel, also biegbar, ausgebildet. Das jeweilige Heizelement 23 ist beispielsweise als elektrische Widerstandsheizpatrone ausgebildet.

Die Heizeinheiten 22 sind an die Versorgungseinheit 21 angeschlossen. Die Versorgungseinheit 21 umfasst einen Steckkontaktverteiler 26, eine elektrische Versorgungsleitung 27 und einen Versorgungsleitungskontaktstecker 28. Die Versorgungsleitung 27 ist mechanisch und elektrisch mit dem Steckkontaktverteiler 26 und dem Versorgungsleitungskontaktstecker 28 verbunden. Die Versorgungsleitung 27 ist flexibel, also biegbar ausgebildet. Die Versorgungsleitung 27 ist fest, also mechanisch und elektrisch unlösbar, mit dem Steckkontaktverteiler 26 und dem Versorgungsleitungskontaktstecker 28 verbunden. Die Versorgungsleitung 27 kann somit nicht zerstörungsfrei von dem Steckkontaktverteiler 26 und dem Versorgungsleitungskontaktstecker 28 getrennt werden.

Der Steckkontaktverteiler 26 umfasst ein Steckkontaktverteilergehäuse 29, in dem ein elektrisch leitendes Verteilerelement 30 angeordnet ist. Das Verteilerelement 30 ist elektrisch leitend mit der Versorgungsleitung 27 verbunden. Weiterhin ist das Verteilerelement 30 mit vier Steckkontakten 31 über jeweilige Schaltelemente 42 elektrisch leitend verbunden. Die Steckkontakte 31 sind an einer Außenseite des Steckkontaktverteilergehäuses 29 angeordnet und somit frei zugänglich.

Die Schaltelemente 42 ermöglichen ein Einschalten und Ausschalten der Energieversorgung an den zugehörigen Steckkontakten 31. Hierzu sind die Schaltelemente 42 an eine in dem Steckkontaktverteiler 26 integrierte Datenbusleitung 43 angeschlossen. Die Datenbusleitung 43 ist mit Datenbusanschlüssen 44, 45 verbunden.

Jede der Heizeinheiten 22 ist mit dem zugehörigen Kontaktstecker 25 in einen der Steckkontakte 31 eingesteckt. Durch das Einstecken ist der jeweilige Kontaktstecker 25 mechanisch und elektrisch leitend mit dem zugehörigen Steckkontakt 31 verbunden.

Die Versorgungseinheit 21 und die Heizeinheiten 22 weisen mindestens die Schutzklasse IP 54, insbesondere mindestens die Schutzklasse IP 64, und insbesondere die Schutzklasse IP 67 auf. Insbesondere weisen der Stecckontaktverteiler 26 bzw. die Steckkontakte 31 und die zugehörigen Kontaktstecker 25 zur Ausbildung der Steckkontaktverbindung die erwähnte Schutzklasse auf.

Zum Aufnehmen der Heizelemente 23 weist der zugehörige Gehäuseabschnitt 8 Aufnahmeausnehmungen 32 auf. Die Aufnahmeausnehmungen 32 sind zwischen den Flanschen 9 ausgebildet und verlaufen im Wesentlichen senkrecht zu den Gehäusebohrungen 10, 11. Die Anzahl der Aufnahmeausnehmungen 32 entspricht der vorgesehenen Anzahl an Heizelementen 23 der Heizvorrichtung 20. Der Gehäuseabschnitt 8 weist beispielsweise vier Aufnahmeausnehmungen 32 auf, wobei zwei Aufnahmeausnehmungen 32 oberhalb der Gehäusebohrungen 10, 11 und in der Förderrichtung 17 beabstandet zueinander und zwei Aufnahmeausnehmungen 32 unterhalb der Gehäusebohrungen 10, 11 und in der Förderrichtung 17 beabstandet zueinander angeordnet sind. Die Heizelemente 23 sind in die zugehörigen Aufnahmeausnehmungen 32 eingesteckt und an dem Gehäuseabschnitt 8 befestigt.

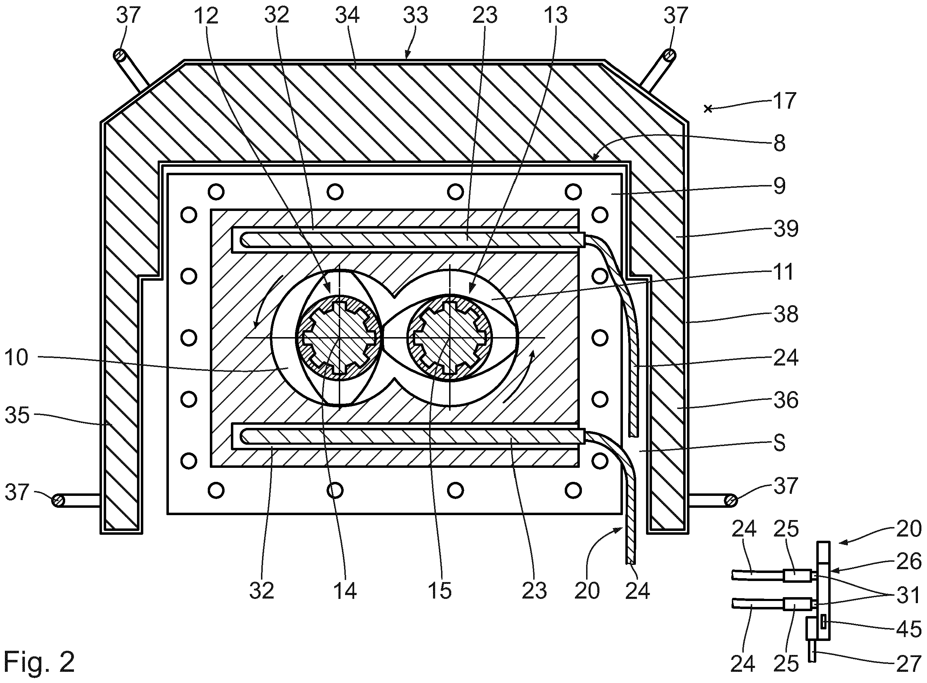

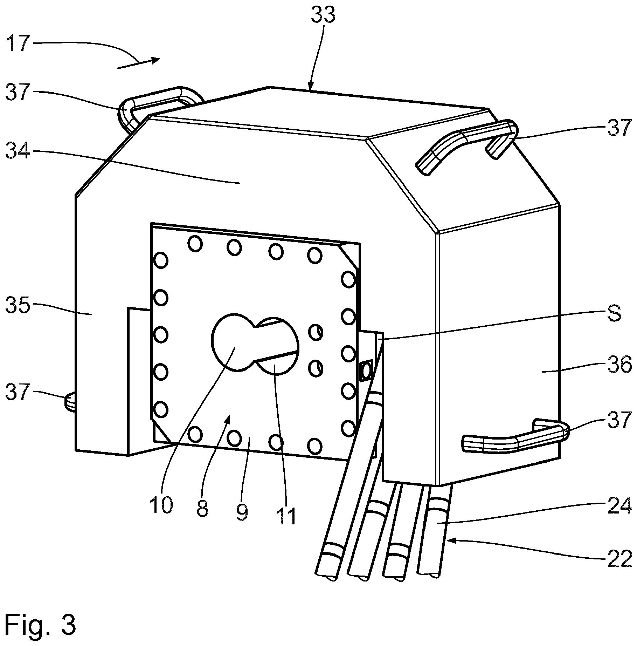

Zur Wärmedämmung weist die Mehrwellen-Schneckenmaschine 2 Wärmedämmhauben 33 auf. Die Wärmedämmhauben 33 sind in Fig. 1 geschnitten dargestellt. In den Fig. 2 und 3 ist eine der Wärmedämmhauben 33 im Detail dargestellt. Jedem Gehäuseabschnitt 8 ist eine Wärmedämmhaube 33 zugeordnet.

Die jeweilige Wärmedämmhaube 33 ist im Querschnitt U-förmig ausgebildet und weist eine Basis 34 und zwei an der Basis 34 angeordnete Schenkel 35, 36 auf. Die jeweilige Wärmedämmhaube 33 ist einteilig ausgebildet, so dass diese mittels Handgriffen 37 im Ganzen montiert bzw. aufgesetzt und demontiert bzw. abgehoben werden kann. Die jeweilige Wärmedämmhaube 33 umfasst eine Außenhülle 38, die einen Innenraum begrenzt. In dem Innenraum ist ein Isoliermaterial 39 angeordnet. Die Außenhülle 38 ist beispielsweise aus einem metallischen Material.

Zwischen den Schenkeln 35, 36 und dem jeweiligen Gehäuseabschnitt 8 ist ein Spalt S ausgebildet. Die Schenkel 35, 36 weisen einen zurückspringenden Abschnitt auf, so dass sich der Spalt S im Bereich der zurückspringenden Abschnitte vergrößert. Durch den Spalt S sind die Anschlussleitungen 24 der Heizelemente 23 in Richtung des Untergestells 5 geführt. Die zu den Heizeinheiten 22 gehörige Versorgungseinheit 21 ist beabstandet zu dem Gehäuse 7 angeordnet. Hierzu weisen die Anschlussleitungen 24 eine Länge L auf, wobei vorzugsweise gilt: 0,5 m ≤ L ≤ 5 m, insbesondere 1,0 m ≤ L ≤ 4 m, insbesondere 1,5 m ≤ L ≤ 3 m.

Der Steckkontaktverteiler 26 der jeweiligen Versorgungseinheit 21 ist an dem Untergestell 5 befestigt. Ausgehend von dem jeweiligen Steckkontaktverteiler 26 verläuft die zugehörige Versorgungsleitung 27 entlang des Untergestells 5, beispielsweise in einem Leitungskanal, zu einer zentralen Energieversorgung 40 mit Energieversorgungsanschlüssen 41. Der jeweilige Versorgungsleitungskontaktstecker 28 ist zur Energieversorgung mit einem Energieversorgungsanschluss 41 mechanisch und elektrisch leitend verbunden.

Zum Ansteuern der Schaltelemente 42 ist an den Datenbusanschluss 44 eine Datenbusleitung 46 angeschlossen, die mit einer Steuereinheit 47 verbunden ist. Die Datenbusleitung 46 kann über den Datenbusanschluss 45 zu einem weiteren Steckkontaktverteiler 26 geführt werden. Über die Datenbusleitung 46 können die Schaltelemente 42 einzeln angesteuert werden, so dass die an die Steckkontakte 31 angeschlossenen Heizelemente 23 einzeln eingeschaltet und ausgeschaltet werden können.

Nachfolgend ist die Instandhaltung einer der Heizvorrichtungen 20 im Falle eines defekten Heizelements 23 beschrieben:
Zum Austausch des defekten ersten Heizelements 23 wird zunächst der zugehörige Versorgungsleitungskontaktstecker 28 von dem Energieversorgungsanschluss 41 mechanisch und elektrisch getrennt. Anschließend wird die das erste Heizelement 23 abdeckende Wärmedämmhaube 33 von dem Gehäuseabschnitt 8 entfernt. Das erste Heizelement 23 ist nun frei zugänglich. Der zu dem ersten Heizelement 23 gehörige Kontaktstecker 25 wird mechanisch und elektrisch von dem zugehörigen Steckkontakt 31 getrennt. Das erste Heizelement 23 wird von dem Gehäuseabschnitt 8 gelöst und aus der Aufnahmeausnehmung 32 entfernt. Die Heizeinheit 22 mit dem defekten Heizelement 23 wird nun durch eine entsprechende Heizeinheit 22 mit einem intakten zweiten Heizelement 23 ersetzt. Das zweite Heizelement 23 wird in die Aufnahmeausnehmung 32 eingeführt und an dem Gehäuseabschnitt 8 befestigt. Anschließend wird der zu dem zweiten Heizelement 23 gehörige Kontaktstecker 25 mit dem freien Steckkontakt 31 mechanisch und elektrisch leitend verbunden. Die Wärmedämmhaube 33 wird nun wieder auf dem Gehäuseabschnitt 8 angeordnet. Anschließend wird der Versorgungsleitungskontaktstecker 28 wieder mit dem Energieversorgungsanschluss 41 mechanisch und elektrisch leitend verbunden.

Durch die erfindungsgemäße Ausbildung der Heizvorrichtungen 20 können Heizelemente 23 einzeln ausgetauscht werden. Der Austausch kann durch eine beliebige Bedienperson erfolgen. Eine Elektrofachkraft ist zum Austausch nicht erforderlich. Durch den modularen Aufbau der Heizvorrichtungen 20 können diese flexibel eingesetzt werden.

Der jeweilige Steckkontaktverteiler 26 kann eine Anzahl N an Steckkontakten 31 aufweisen, wobei vorzugsweise gilt: 4 ≤ N ≤ 8. An einen Stecckontaktverteiler 26 können Heizeinheiten 23 für einen Gehäuseabschnitt 8 oder mehrere Gehäuseabschnitte 8 angeschlossen werden.

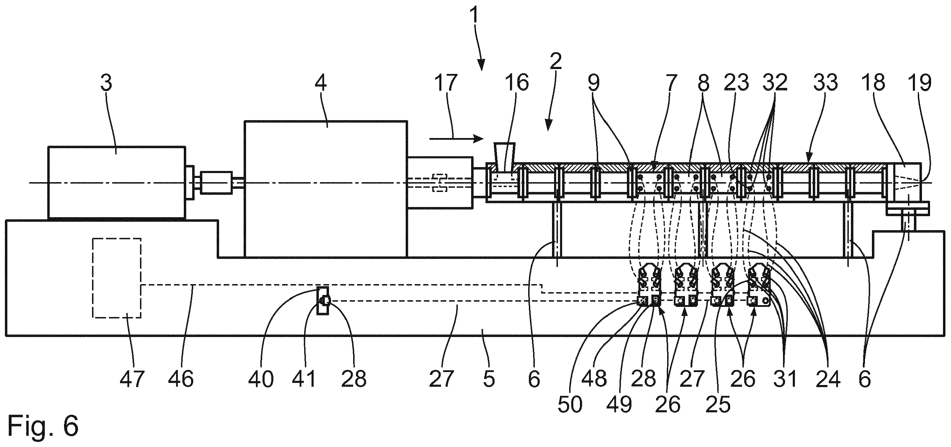

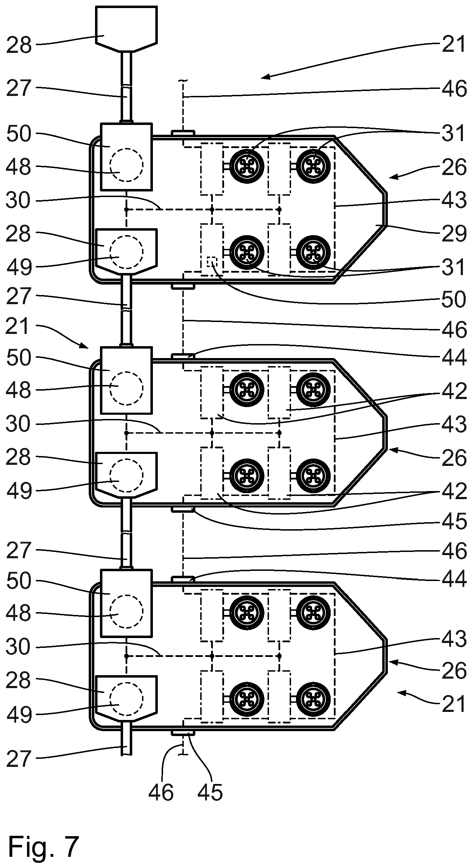

Nachfolgend ist anhand der Fig. 6 und 7 ein zweites Ausführungsbeispiel der Erfindung beschrieben. Im Unterschied zu dem ersten Ausführungsbeispiel umfasst der jeweilige Steckkontaktverteiler 26 einen ersten Versorgungsleitungsanschluss 48 und einen zweiten Versorgungsleitungsanschluss 49. Die Versorgungsleitung 27 eines ersten Steckkontaktverteilers 26 ist mittels des Versorgungsleitungskontaktsteckers 28 an den Energieversorgungsanschluss 41 der zentralen Energieversorgung 40 angeschlossen und mittels eines weiteren Versorgungsleitungskontaktsteckers 50 an den Versorgungsleitungsanschluss 48 angeschlossen. Die Versorgungsleitungen 27 der weiteren Steckkontaktverteiler 26 sind jeweils an dem Versorgungsleitungsanschluss 48 und dem Versorgungsleitungsanschluss 49 des vorangegangenen Steckkontaktverteilers 26 angeschlossen. Die jeweilige Versorgungsleitung 27 ist lösbar mit dem zugehörigen Steckkontaktverteiler 26 und dem benachbarten Steckkontaktverteiler 26 verbunden. In einem nicht dargestellten Ausführungsbeispiel kann die Versorgungsleitung 27 mit dem zugehörigen Steckkontaktverteiler 26 fest und mit dem benachbarten Steckkontaktverteiler 26 lösbar verbunden sein. Die Versorgungsleitung 27 einer ersten Heizvorrichtung 20 ist somit an den Energieversorgungsanschluss 41 einer zentralen Energieversorgung 40 angeschlossen und die Versorgungsleitungen 27 weiterer Heizvorrichtungen 20 jeweils an den Steckkontaktverteiler 26 der vorherigen Heizvorrichtung 20 und somit an die zentrale Energieversorgung 40 angeschlossen. Hierdurch kann der Aufwand für die Energieversorgung der Heizvorrichtungen 20 reduziert werden.

Zur Überwachung der angeschlossenen Heizelemente 23 umfasst das jeweilige Schaltelement 42 einen Strom-Messsensor 50. Der Strom-Messsensor 50 ist in Fig. 7 aus Gründen der Übersichtlichkeit lediglich bei einem der Schaltelemente 42 veranschaulicht. Die Messwerte des jeweiligen Strom-Messsensors 50 werden über den Datenbus zu der Steuereinheit 47 übermittelt. In der Steuereinheit 47 werden die Messwerte ausgewertet, so dass die Funktion der Heizelemente 23 überwacht und ein drohender Ausfall eines Heizelements 23 frühzeitig erkannt werden kann.

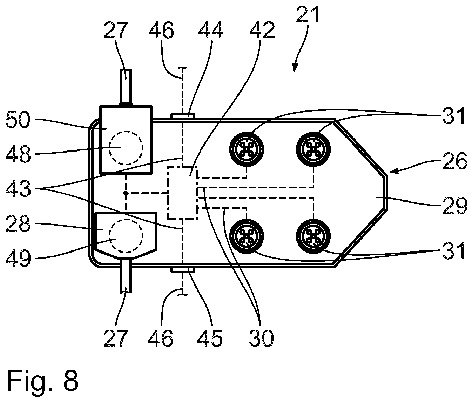

Nachfolgend ist anhand von Fig. 8 ein drittes Ausführungsbeispiel der Erfindung beschrieben. Im Unterschied zu den vorangegangenen Ausführungsbeispielen umfasst die Heizvorrichtung 20 ein zentrales Schaltelement 42. Das Schaltelement 42 dient zum Einschalten und Ausschalten sämtlicher an die Steckkontakte 31 angeschlossenen Heizelemente 23. Das Schaltelement 42 wird mittels der Datenbusleitung 46 gesteuert.

## Patentansprüche

1. Heizvorrichtung für mindestens einen Gehäuseabschnitt einer Schneckenmaschine mit
- mindestens zwei elektrischen Heizelementen (23),
- mindestens zwei elektrischen Anschlussleitungen (24), die jeweils mit einem der mindestens zwei elektrischen Heizelemente (23) verbunden sind,
- einer elektrischen Versorgungsleitung (27) zur Energieversorgung der mindestens zwei elektrischen Heizelemente (23) über die mindestens zwei Anschlussleitungen (24),
**dadurch gekennzeichnet,**
**dass** die Versorgungsleitung (27) mit einem Steckkontaktverteiler (26) verbunden ist,
**dass** der Steckkontaktverteiler (26) mindestens zwei Steckkontakte (31) umfasst,
**dass** die mindestens zwei Anschlussleitungen (24) jeweils mittels eines Kontaktsteckers (25) mit einem der mindestens zwei Steckkontakte (31) verbunden ist, und
**dass** die Heizvorrichtung (20) mindestens ein Schaltelement (42) zum Schalten mindestens eines elektrischen Heizelements (23) umfasst.

2. Heizvorrichtung nach Anspruch 1, **dadurch gekennzeichnet dass** die mindestens zwei Anschlussleitungen (24) flexibel ausgebildet sind.

3. Heizvorrichtung nach Anspruch 1 oder 2, **dadurch gekennzeichnet, dass** der Steckkontaktverteiler (26) mindestens vier, insbesondere mindestens sechs, und insbesondere mindestens acht Steckkontakte (31) umfasst.

4. Heizvorrichtung nach mindestens einem der vorangegangenen Ansprüche, **dadurch gekennzeichnet,**
**dass** die elektrische Versorgungsleitung (27) fest mit dem Steckkontaktverteiler (26) verbunden ist.

5. Heizvorrichtung nach mindestens einem der vorangegangenen Ansprüche, **dadurch gekennzeichnet,**
**dass** die mindestens zwei Steckkontakte (31) und die jeweils zugehörigen Kontaktstecker (25) mechanisch und elektrisch miteinander verbunden sind.

6. Heizvorrichtung nach mindestens einem der vorangegangenen Ansprüche, **dadurch gekennzeichnet,**
**dass** der Steckkontaktverteiler (26) und die Versorgungsleitung (27) eine Versorgungseinheit (21) ausbilden.

7. Heizvorrichtung nach mindestens einem der vorangegangenen Ansprüche, **dadurch gekennzeichnet,**
**dass** das jeweilige elektrische Heizelement (23) mit der zugehörigen elektrischen Anschlussleitung (24) und dem zugehörigen Kontaktstecker (25) eine Heizeinheit (22) ausbilden.

8. Heizvorrichtung nach mindestens einem der vorangegangenen Ansprüche, **dadurch gekennzeichnet,**
**dass** der Steckkontaktverteiler (26) und/oder der jeweilige Kontaktstecker (25) und/oder die Versorgungseinheit (21) und/oder die jeweilige Heizeinheit (22) mindestens die Schutzklasse IP54, insbesondere mindestens die Schutzklasse IP64, und insbesondere die Schutzklasse IP67 aufweist.

9. Heizvorrichtung nach mindestens einem der vorangegangenen Ansprüche, **dadurch gekennzeichnet,**
**dass** das mindestens eine Schaltelement (42) mit mindestens einem Datenbusanschluss (44, 45) verbunden ist.

10. Heizvorrichtung nach mindestens einem der vorangegangenen Ansprüche, **gekennzeichnet,**
**durch** mindestens einen Messsensor (50) zum Überwachen mindestens eines elektrischen Heizelements (23).

11. Heizvorrichtung nach mindestens einem der vorangegangenen Ansprüche, **dadurch gekennzeichnet,**
**dass** der Steckkontaktverteiler (26) mindestens einen Versorgungsleitungsanschluss (48, 49), insbesondere zwei Versorgungsleitungsanschlüsse (49, 50), umfasst.

12. Schneckenmaschine umfassend
- ein Gehäuse (7) mit mindestens zwei Gehäuseabschnitten (8),
- mindestens eine in dem Gehäuse (7) ausgebildete Gehäusebohrung (10, 11),
- mindestens eine in der Gehäusebohrung (10, 11) drehbar angeordnete Behandlungselementwelle (12, 13), und
- mindestens eine Heizvorrichtung (20) nach mindestens einem der Ansprüche 1 bis 11, wobei die mindestens zwei elektrischen Heizelemente (23) in Aufnahmeausnehmungen (32) mindestens eines der Gehäuseabschnitte (8) angeordnet sind.

13. Schneckenmaschine nach Anspruch 12, **dadurch gekennzeichnet, dass** mindestens eine Wärmedämmhaube (33) an mindestens einem der Gehäuseabschnitte (8) angeordnet ist.

14. Verfahren zur Instandhaltung einer Heizvorrichtung mit den Schritten:
- Bereitstellen einer Heizvorrichtung (20) nach mindestens einem der Ansprüche 1 bis 11,
- Trennen des zu einem ersten Heizelement (23) gehörigen Kontaktsteckers (25) von dem Steckkontakt (31) des Steckkontaktverteilers (26),
- Ersetzen des ersten Heizelements (23) durch ein zweites Heizelement (23), und
- Verbinden des zu dem zweiten Heizelement (23) gehörigen Kontaktsteckers (25) mit einem Steckkontakt (31) des Steckkontaktverteilers (26).

## Claims

1. Heating apparatus for at least one housing section of a screw extruder comprising
- at least two electrical heating elements (23),
- at least two electrical connection lines (24), which are each connected to one of the at least two electrical heating elements (23),
- an electrical supply line (27) for supplying power to the at least two electrical heating elements (23) via the at least two connection lines (24),
**characterized**
**in that** the supply line (27) is connected to a plug-in contact distributor (26),
**in that** the plug-in contact distributor (26) comprises at least two plug-in contacts (31),
**in that** the at least two connection lines (24) are each connected to one of the at least two plug-in contacts (31) by means of a contact plug (25), and
**in that** the heating apparatus (20) comprises at least one switching element (42) for switching at least one electrical heating element (23).

2. Heating apparatus according to claim 1, **characterized in that** the at least two connection lines (24) are of flexible design.

3. Heating apparatus according to claim 1 or 2, **characterized in that** the plug-in contact distributor (26) comprises at least four, in particular at least six, and in particular at least eight plug-in contacts (31).

4. Heating apparatus according to at least one of the preceding claims, **characterized**
**in that** the electrical supply line (27) is fixedly connected to the plug-in contact distributor (26).

5. Heating apparatus according to at least one of the preceding claims, **characterized**
**in that** the at least two plug-in contacts (31) and the respectively associated contact plugs (25) are mechanically and electrically connected to one another.

6. Heating apparatus according to at least one of the preceding claims, **characterized**
**in that** the plug-in contact distributor (26) and the supply line (27) form a supply unit (21).

7. Heating apparatus according to at least one of the preceding claims, **characterized**
**in that** the respective electrical heating element (23) together with the associated electrical connection line (24) and the associated contact plug (25) form a heating unit (22).

8. Heating apparatus according to at least one of the preceding claims, **characterized**
**in that** the plug-in contact distributor (26) and/or the respective contact plug (25) and/or the supply unit (21) and/or the respective heating unit (22) are/is at least of protection class IP54, in particular at least of protection class IP64, and in particular of protection class IP67.

9. Heating apparatus according to at least one of the preceding claims, **characterized**
**in that** the at least one switching element (42) is connected to at least one data bus connection (44, 45).

10. Heating apparatus according to at least one of the preceding claims, **characterized**
**by** at least one measurement sensor (50) for monitoring at least one electrical heating element (23).

11. Heating apparatus according to at least one of the preceding claims, **characterized**
**in that** the plug-in contact distributor (26) comprises at least one supply line connection (48, 49), in particular two supply line connections (49, 50).

12. Screw extruder comprising
- a housing (7) having at least two housing sections (8),
- at least one housing bore (10, 11) which is formed in the housing (7),
- at least one treatment element shaft (12, 13) which is rotatably arranged in the housing bore (10, 11), and
- at least one heating apparatus (20) according to at least one of claims 1 to 11, wherein the at least two electrical heating elements (23) are arranged in receiving recesses (32) of at least one of the housing sections (8).

13. Screw extruder according to claim 12, **characterized in that** at least one thermally insulating hood (33) is arranged on at least one of the housing sections (8).

14. Method for servicing a heating apparatus comprising the steps of:
- providing a heating apparatus (20) according to at least one of claims 1 to 11,
- disconnecting the contact plug (25) which is associated with a first heating element (23) from the plug-in contact (31) of the plug-in contact distributor (26),
- replacing the first heating element (23) with a second heating element (23), and
- connecting the contact plug (25) which is associated with the second heating element (23) to a plug-in contact (31) of the plug-in contact distributor (26).

## Revendications

1. Dispositif de chauffage pour au moins une section du boîtier d'une machine à vis sans fin comprenant
- au moins deux éléments chauffants électriques (23),
- au moins deux lignes de connexion électrique (24), qui sont chacune reliées à l'un des au moins deux éléments chauffants électriques (23),
- une ligne d'alimentation électrique (27) pour l'alimentation en énergie des au moins deux éléments chauffants électriques (23) par l'intermédiaire des au moins deux lignes de connexion (24),
**caractérisé en ce**
**que** la ligne d'alimentation (27) est reliée à un répartiteur de contacts enfichables (26),
**que** le répartiteur de contacts enfichables (26) comprend au moins deux contacts enfichables (31),
**que** les au moins deux lignes de connexion (24) sont reliées chacune au moyen d'une fiche de contact (25) à l'un des au moins deux contacts enfichables (31), et
**que** le dispositif de chauffage (20) comprend au moins un élément de commutation (42) pour commuter au moins un élément chauffant électrique (23).

2. Dispositif de chauffage selon la revendication 1, **caractérisé en ce que** les au moins deux lignes de connexion (24) sont conçues de manière flexible.

3. Dispositif de chauffage selon la revendication 1 ou 2, **caractérisé en ce que** le répartiteur de contacts enfichables (26) comprend au moins quatre, en particulier au moins six, et en particulier au moins huit contacts enfichables (31).

4. Dispositif de chauffage selon au moins l'une des revendications précédentes, **caractérisé en ce**
**que** la ligne d'alimentation électrique (27) est reliée de manière fixe au répartiteur de contacts enfichables (26).

5. Dispositif de chauffage selon au moins l'une des revendications précédentes, **caractérisé en ce**
**que** les au moins deux contacts enfichables (31) et les fiches de contact (25) respectivement associées sont reliés mécaniquement et électriquement entre eux.

6. Dispositif de chauffage selon au moins l'une des revendications précédentes, **caractérisé en ce**
**que** le répartiteur de contacts enfichables (26) et la ligne d'alimentation (27) forment une unité d'alimentation (21).

7. Dispositif de chauffage selon au moins l'une des revendications précédentes, **caractérisé en ce**
**que** l'élément chauffant électrique (23) respectif forme une unité de chauffage (22) avec la ligne de connexion électrique (24) associé et la fiche de contact (25) associée.

8. Dispositif de chauffage selon au moins l'une des revendications précédentes, **caractérisé en ce**
**que** le répartiteur de contacts enfichables (26) et/ou la fiche de contact (25) respective et/ou l'unité d'alimentation (21) et/ou l'unité de chauffage (22) respective présente au moins la classe de protection IP54, en particulier au moins la classe de protection IP64, et en particulier la classe de protection IP67.

9. Dispositif de chauffage selon au moins l'une des revendications précédentes, **caractérisé en ce**
**que** l'au moins un élément de commutation (42) est relié à au moins une connexion de bus de données (44, 45).

10. Dispositif de chauffage selon au moins l'une des revendications précédentes, **caractérisé**
**par** au moins un capteur de mesure (50) pour surveiller au moins un élément chauffant électrique (23).

11. Dispositif de chauffage selon au moins l'une des revendications précédentes, **caractérisé en ce**
**que** le répartiteur de contacts enfichables (26) comprend au moins un raccord de ligne d'alimentation (48, 49), en particulier deux raccords de ligne d'alimentation (49, 50).

12. Machine à vis sans fin comprenant
- un boîtier (7) ayant au moins deux sections de boîtier (8),
- au moins un alésage de boîtier (10, 11) formé dans le boîtier (7),
- au moins un arbre d'élément de traitement (12, 13) disposé de manière rotative dans l'alésage du boîtier (10, 11), et
- au moins un dispositif de chauffage (20) selon au moins l'une des revendications 1 à 11, dans lequel les au moins deux éléments chauffants électriques (23) sont disposés dans des évidements de réception (32) d'au moins l'une des sections de boîtier (8).

13. Machine à vis sans fin selon la revendication 12, **caractérisée en ce qu'**au moins un capot d'isolation thermique (33) est disposé sur au moins l'une des sections de boîtier (8).

14. Procédé destiné à l'entretien d'un dispositif de chauffage comprenant les étapes suivantes :
- mise à disposition d'un dispositif de chauffage (20) selon au moins l'une des revendications 1 à 11,
- séparation de la fiche de contact (25) appartenant à un premier élément chauffant (23) du contact enfichable (31) du distributeur de contacts enfichables (26),
- remplacement du premier élément chauffant (23) par un deuxième élément chauffant (23), et
- connexion de la fiche de contact (25) appartenant au deuxième élément chauffant (23) à un contact enfichable (31) du distributeur de contacts enfichables (26).
